# FASCICULE DE BREVET EUROPEEN

(11) **EP 2 616 214 B1**
(45) Date de publication et mention de la délivrance du brevet: **05.08.2015**
(21) Numéro de dépôt: 11773103.4
(22) Date de dépôt: 15.09.2011
(51) Int. Cl.: B24B 9/04, B24B 19/08, B24B 19/14

(54) **PROCÈDE ET MACHINE OUTIL POUR L'AJUSTAGE DU CONTOUR D'UN PIED D'AUBE DE TURBINE**
VERFAHREN UND WERKZEUGMASCHINE ZUR EINSTELLUNG DER KONTUR EINES TURBINENSCHAUFELFUSSES
METHOD AND MACHINE TOOL FOR ADJUSTING THE CONTOUR OF A TURBINE BLADE ROOT

(30) Priorité: 15.09.2010 FR 1057384
(43) Date de publication de la demande: 24.07.2013
(73) Titulaire: Snecma, 75015 Paris (FR)
(72) Inventeur: DUPOUY, Olivier, F-92300 Levallois-perret (FR); DEFROCOURT, Christian, F-95130 Franconville (FR); MARQUOIN, Thomas, F-92290 Chatenay Malabry (FR); PAUL, Pascal, F-78800 Houille (FR)
(74) Mandataire: Gevers France
(86) Numéro de dépôt international: PCT/FR2011/052131
(87) Numéro de publication internationale: WO 2012/035273

(56) Documents cités:
- WO-A1-91/12111
- WO-A1-95/09714
- US-A1- 2005 032 460
- US-A1- 2007 234 564

## Description

La présente invention concerne le domaine de l'ajustage d'une pièce. Plus précisément, l'invention se rapporte à un procédé et une machine outil pour l'ajustage du contour d'un pied d'aube de turbine, ce dernier comprenant une arête saillante principale définie par un angle intérieur déterminé.

Dans la suite, on entend par :
- arête saillante : la ligne formée par l'intersection de deux surfaces du pied d'aube à ajuster ;
- angle intérieur d'une arête saillante : l'angle défini entre les deux surfaces formant l'arête ; et
- contour complexe : une ligne sinueuse présentant une succession de creux et de bosses.

On sait que, après l'opération d'usinage du pied d'une aube de turbine, chaque profil du pied est délimité par un contour pourvu d'une arête saillante (dont l'angle intérieur associé est droit) qui doit être éliminée lors d'une opération d'ajustage.

De façon connue, l'ajustage d'un pied d'aube est actuellement réalisé manuellement par un opérateur qualifié qui façonne, par exemple au moyen d'une fraise à carbure et d'une brosse, le contour complexe du profil du pied pour émousser l'arête saillante et l'arrondir en arc de cercle (une telle opération d'ajustage étant encore appelée rayonnage).

Cependant, l'opération d'ajustage étant manuelle, il est fréquent d'observer des écarts dimensionnels entre les différents pieds d'aube ajustés par un même opérateur. Ces écarts apparaissent généralement au niveau de l'arrondi obtenu (après fraisage et brossage de l'arête saillante), qui diffère d'un pied à l'autre (le rayon de l'arrondi variant suivant les pieds ajustés).

En outre, lorsque l'ajustage des pieds est insuffisant ou imprécis (l'arête saillante n'ayant, par exemple, pas été suffisamment émoussée), les opérations de fabrication des pieds, qui suivent l'opération d'ajustage, peuvent en être affectées. A titre d'exemple, l'opération de grenaillage appliquée sur un pied d'aube ajusté, dont l'arête saillante du contour d'un profil a été insuffisamment arrondie, est pénalisée, certaines des billes de grenaillage étant refoulées par cette arête mal émoussée.

De plus, la présence d'écarts dimensionnels entre les pieds complique également le montage de ces derniers sur le disque de support correspondant de la turbine à haute pression.

Par ailleurs, l'opération d'ajustage est faite manuellement, ce qui augmente le coût global de fabrication des pieds d'aube. En outre, elle provoque fréquemment des traumatismes physiologiques TMS (pour Troubles Musculo-Squelettiques) chez les opérateurs.

Outre les inconvénients précités, la persistance d'arêtes saillantes après l'ajustage au niveau d'un pied favorise l'apparition de fissures sur les pièces coopérant avec celui-ci, à même d'entraîner une rupture desdites pièces.

Aussi, pour tenter de pallier les inconvénients précités, il est connu d'utiliser un bras robotisé à six axes destiné à réaliser un ajustage automatique du contour des profils d'un pied d'aube.

Toutefois; la programmation d'un tel bras robotisé s'avère fastidieuse pour une restitution généralement imparfaite du mouvement d'un opérateur. En outre, le coût élevé du bras robotisé contribue à rendre cet ajustage automatique inapproprié dans la grande majorité des cas.

Le document US2007/234564 décrit une solution simplifiant la cinématique du bras où la pièce est montée en translation et rotation devant un outil mobile dans une seule direction. Cependant, dans ce cas la programmation se fait en référence à un modèle, ce qui rend le montage malaisé pour l'adapter à l'ajustage automatique d'arrêtés aux formes complexes, non exactement reproductibles d'une pièce à l'autre.

La présente invention a pour objet de remédier à ces inconvénients.

A cette fin, selon l'invention, le procédé pour l'ajustage d'un contour prédéterminé d'un pied d'aube de turbine est défini par les caractéristiques de la revendication 1.

Ainsi, grâce à l'invention, le chanfrein réalisé sur l'arête principale saillante entraîne la formation de deux arêtes auxiliaires moins vives, de sorte que leur élimination en est grandement facilitée. Quelle que soit la profondeur du chanfrein réalisé au niveau de l'arête principale, l'opération d'ajustage de l'invention provoque l'apparition d'une portion rectiligne (également désignée ligne de chanfrein) sur la courbure du contour définie dans un plan orthogonal à ce dernier. La longueur de la ligne de chanfrein est d'autant plus grande que la profondeur du chanfrein est élevée. En outre, la ligne de chanfrein est réduite, au moins en partie, lors de l'élimination des deux arêtes auxiliaires. Ainsi, la courbure du contour, dans un plan orthogonal à ce dernier, présente une forme arrondie acceptable.

Selon un mode de réalisation conforme à la présente invention, bien que les étapes B/ et C/ puissent être réalisées de façon manuelle, elles sont avantageusement mises en oeuvre automatiquement, ce qui permet d'obtenir une régularité de l'ajustage sur l'ensemble du ou des contours du pied d'aube. En outre, l'opération d'ajustage de l'invention peut être rigoureusement reproduite sur une pluralité de pieds d'aube identiques, celles-ci présentant alors des contours ajustés sensiblement similaires. De plus, l'intervention d'un opérateur est limitée (par exemple au placement du pied d'aube considéré dans un logement approprié), réduisant ainsi le risque d'apparition de troubles TMS chez celui-ci.

De préférence, on fixe préalablement le pied d'aube à ajuster.

En outre, le pied d'aube peut être avantageusement fixé à des moyens montés rotatifs autour d'un axe, de manière à faciliter l'opération d'ajustage de l'invention.

Par ailleurs, dans un mode de réalisation conforme à l'invention, les angles intérieurs associés respectivement aux arêtes auxiliaires sont identiques.

En outre, à titre d'exemple illustratif mais non limitatif, les angles intérieurs des arêtes principale et auxiliaires sont respectivement égaux à 90° et 135°.

Dans un autre mode de réalisation conforme à l'invention, l'étape B/ est réalisée par brossage des arêtes auxiliaires.

Un tel brossage de l'étape B/ peut être effectué au moyen d'une brosse circulaire rotative à poils ondulés.

Les poils ondulés de la brosse circulaire peuvent, par exemple, être en nylon, tout autre matériau désiré restant, néanmoins, envisageable.

En outre, la brosse circulaire est avantageusement entraînée en rotation par un arbre longitudinal sensiblement orthogonal, d'une part, à la direction générale des poils ondulés et, d'autre part, à la portion en cours de brossage de chacune des arêtes auxiliaires. Ainsi, les poils de la brosse circulaire tournent dans un plan de rotation sensiblement parallèle à chacune des arêtes auxiliaires. Le brossage de la brosse circulaire ainsi agencée est notamment rendu possible par l'ondulation des poils de la brosse.

Par ailleurs, la présente invention concerne également une machine outil pour l'ajustage d'un contour prédéterminé d'un pied d'aube de turbine défini par les caractéristiques de la revendication 6. Ainsi, le chanfrein obtenu sur le contour considéré d'un pied d'aube est régulier et les arêtes auxiliaires sont émoussées de façon sensiblement identique sur l'ensemble du contour. De plus, l'ajustage peut être répété à l'identique sur une pluralité de pieds d'aube, de sorte que l'on obtient des pièces avec des contours ajustés sensiblement similaires entre eux.

Bien entendu, en variante, la commande des moyens pour chanfreiner et des moyens de brossage peut être manuelle par action d'un opérateur qualifié.

Par ailleurs, la machine outil comporte de préférence des moyens, montés rotatifs autour d'un axe, auxquels est fixée le pied d'aube à ajuster et qui peuvent comporter au moins un module de fixation amovible apte à enserrer le pied d'aube à ajuster.

La machine outil étant agencée pour ajuster un pied d'aube monté sur ladite aube, un tel module de fixation peut comporter des organes de contact destinés à s'appliquer avec une surface réduite sur l'aube dont le pied est à ajuster. Avantageusement, le module de fixation comporte également au moins un organe de contact destiné à s'appliquer sur le pied d'aube à ajuster.
Les figures du dessin annexé feront bien comprendre comment l'invention peut être réalisée. Sur ces figures, des références identiques désignent des éléments semblables.
La figure 1 est un schéma synoptique d'une machine outil, conforme à la présente invention, pour l'ajustage d'un ou plusieurs contours d'un pied d'aube de turbine usiné.
La figure 2 présente, dans une vue en perspective du dessus, le profil d'un pied d'aube d'une turbine haute pression, dont le contour a été ajusté par la machine outil de la figure 1, conformément à l'invention.
Les figures 3 à 5 illustrent la courbure du contour du profil d'un pied d'aube respectivement avant l'opération de chanfreinage (figure 3), après l'opération de chanfreinage (figure 4) et après l'opération de brossage (figure 5), conformément à la présente invention.
La figure 6 montre, dans une vue schématique en perspective, un exemple de module de fixation d'une aube destiné à être logé dans un support mobile de pièces, intégré à la machine outil de la figure 1.
Les figures 7A et 7B représentent, dans une vue en perspective schématique, respectivement les deux coquilles intrados et extrados que comporte le module de fixation de la figure 6.

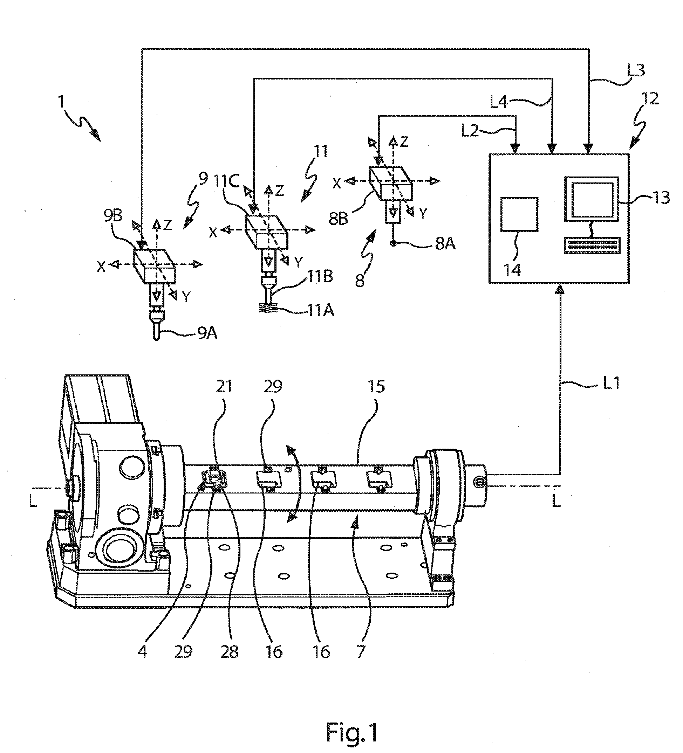

Sur la figure 1, on a représenté, sous la forme d'un schéma synoptique, une machine outil à commande numérique 1, conforme à la présente invention, pour l'ajustage du contour d'un pied d'aube de turbine usiné.

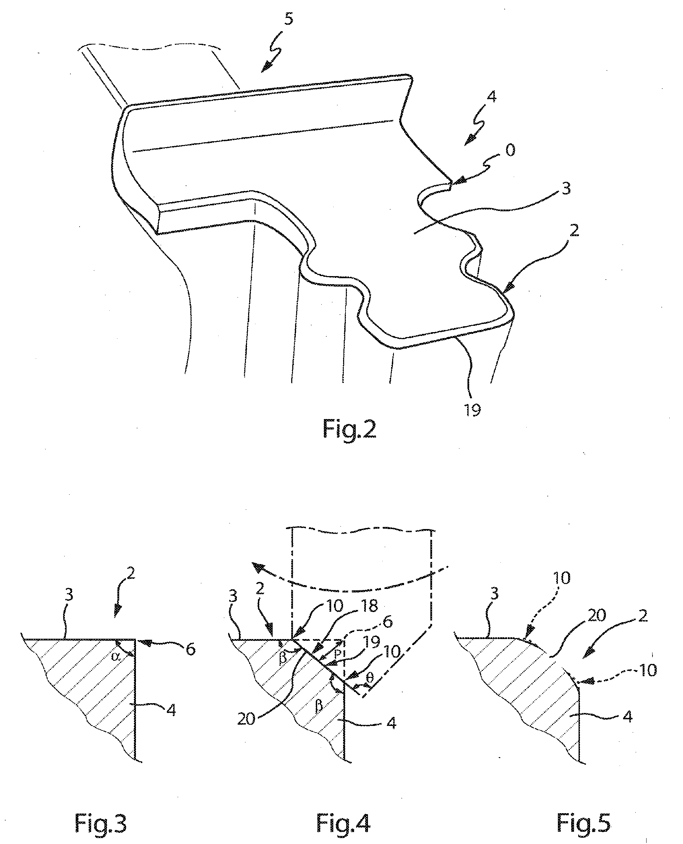

Dans la suite, à titre d'exemple illustratif mais non limitatif, on considère l'ajustage du contour complexe 2 du profil 3 d'un pied 4 d'une aube 5 de turbine haute pression pour moteur d'avion (figure 2).

En outre, dans cet exemple, le contour 2 du profil 3 du pied d'aube 4 présente, avant ajustage, une arête principale saillante 6 dont l'angle intérieur α est sensiblement droit (soit égal à 90°). Autrement dit, la courbure du contour, définie dans un plan orthogonal à ce dernier, comporte un angle droit (figure 3).

Comme le montre la figure 1, la machine outil 1 de l'invention comporte les moyens suivants :
- des moyens 7 pour fixer une aube 5 sur la machine outil 1, qui sont montés rotatifs autour d'un axe longitudinal L ;
- des moyens 8 (désignés par la suite palpeur) pour palper le contour prédéterminé 2 d'un profil du pied de l'aube fixée 5, de manière à détecter un point d'origine O prédéfini sur ce contour 2 (figure 2) ;
- des moyens 9 pour chanfreiner l'arête principale 6 du contour 2 du pied 4 à partir du point d'origine O détecté, de manière à obtenir deux arêtes saillantes auxiliaires 10 dont les angles intérieurs β associés sont respectivement supérieurs à l'angle intérieur α de l'arête principale 6 (figure 4) ;
- des moyens 11 pour brosser les arêtes auxiliaires 10 obtenues après chanfreinage, afin de parfaire l'ajustage du contour 2 du profil du pied 4 ; et
- des moyens 12 de commande automatique des moyens 7, du palpeur 8, des moyens 9 pour chanfreiner ainsi que les moyens 11 pour brosser, auxquels ils sont reliés respectivement par les liaisons L1 à L4.

Comme le montre la figure 1, les moyens de commande automatique comportent une interface homme/machine 13 par l'intermédiaire de laquelle peut être configuré, par un opérateur qualifié, un programme pour l'ajustage du contour 2 du pied d'aube 4. Un tel programme, sauvegardé dans une mémoire 14 des moyens 12, comporte une suite d'instructions de mouvements et/ou d'actions.

Au cours de la configuration du programme d'ajustage, l'opérateur définit les caractéristiques de la trajectoire à suivre par les moyens pour chanfreiner 9 en fonction du contour 2 du pied 4. L'origine de la trajectoire est déterminée par le point d'origine O prédéfini que le palpeur détecte sur le pied 4.

En outre, tel qu'illustré sur la figure 1, les moyens 7 comprennent un support mobile 15 de forme rectangulaire, apte à tourner autour de l'axe longitudinal L. Le support 15 comporte plusieurs logements 16 identiques qui sont ménagés dans celui-ci et qui sont destinés à recevoir chacun un module de fixation 21 amovible (chaque logement comportant une forme complémentaire au module de fixation 21). Sur la figure 1, quatre logements 16 sont par exemple représentés, de sorte que le support 15 peut accueillir quatre modules de fixation 21 (soit quatre aubes 5 à ajuster).

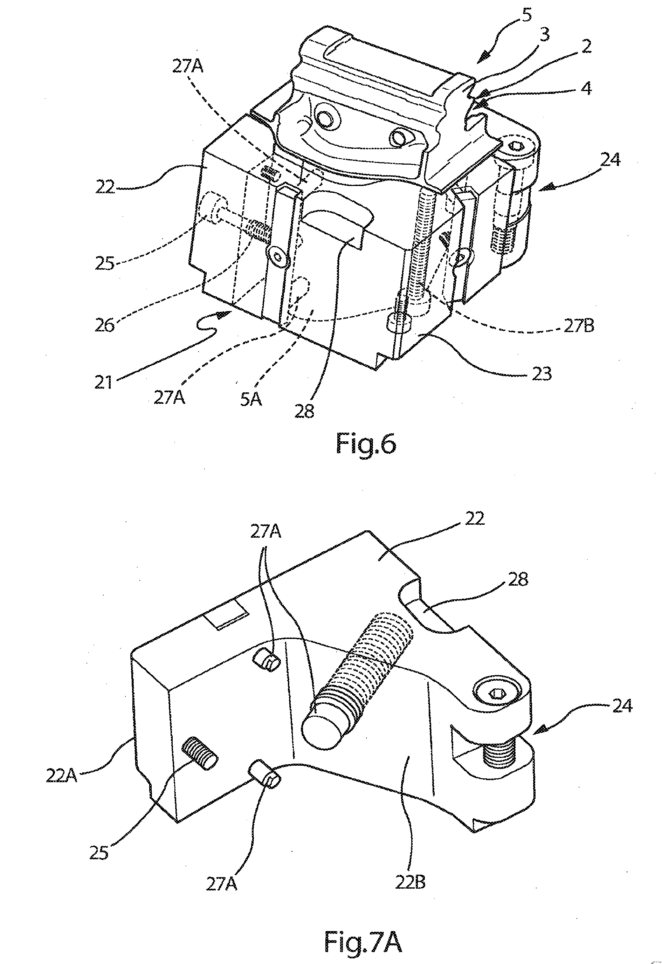

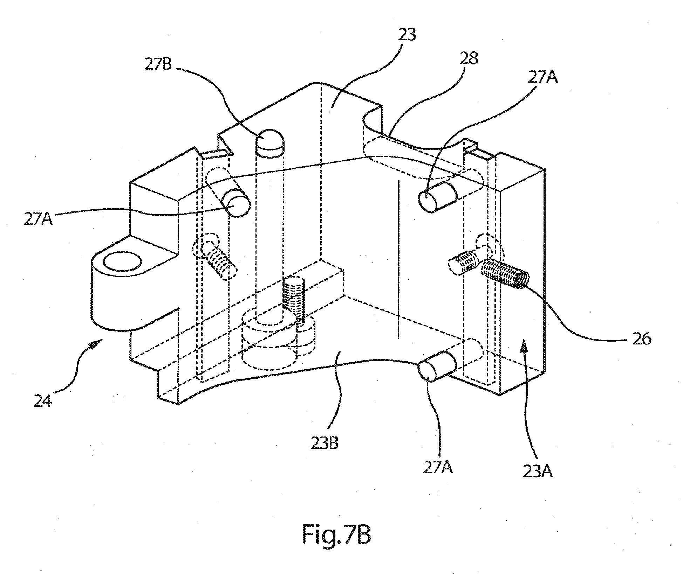

En outre, comme le montrent les figures 6, 7A et 7B, chaque module de fixation 21, apte à maintenir fermement une aube 5, comporte deux coquilles 22 et 23 complémentaires destinées à s'appliquer respectivement sur l'intrados et l'extrados de l'aube 5 pour enserrer l'ailette 5A de cette dernière. Par la suite, les coquilles 22 et 23 (jouant le rôle de bras de maintien) sont respectivement désignées coquille intrados et coquille extrados.

Les coquilles 22 et 23 sont articulées l'une à l'autre par l'intermédiaire d'une charnière 24, de sorte que le module de fixation 21 peut s'ouvrir pour accueillir une aube 5 et se refermer pour l'enserrer, et inversement. Une vis de serrage 25, montée sur la coquille intrados 22 et destinée à être vissée dans un évidement 26 correspondant de la coquille extrados 23, permet de joindre les extrémités libres 22A et 23A des coquilles 22 et 23 respectivement, une fois l'aube 5 correctement positionnée. Ainsi, cette dernière peut être maintenue enserrée par le module de fixation 21.

La coquille intrados 22 comporte trois ergots internes 27A (également désignés organes de contact) en saillie sur sa face interne 22B, qui sont destinés à s'appliquer sur l'intrados de l'aube 5.

De façon semblable, la coquille extrados 23 comprend trois ergots internes 27A en saillie sur sa face interne 23B aptes à s'appliquer sur l'extrados de l'aube 5. Autrement dit, le module de fixation 21 comporte six ergots internes 27A qui forment six surfaces de contact réduites avec l'aube 5, diminuant ainsi le risque de recristallisations du matériau formant cette dernière.

Il est à noter que l'extrémité d'au moins certains des ergots internes 27A peut être conformée pour épouser la surface correspondante de l'aube 5 (intrados ou extrados).

Dans l'exemple, les ergots 27A sont montés amovibles sur les coquilles 22 et 23, afin de pouvoir être ajustés et/ou remplacés par des ergots d'un autre type adapté à une autre forme d'aube. Autrement dit, dans ce cas, le module de fixation 21 peut accueillir différentes formes d'aube, par simple ajustement et/ou remplacement des ergots internes.

En outre, la coquille extrados 23 comporte un ergot externe 27B, en saillie sur une de ses faces externes, sur lequel peut reposer le pied 4 de l'aube 5.

Grâce au module de fixation 21, le contour 2 du profil 3 du pied 4 à ajuster est dégagé et devient dès lors accessible pour subir les opérations d'ajustage décrites par la suite.

De plus, le module de fixation 21 comporte deux échancrures 28, pratiquées respectivement dans la paroi de chacune des coquilles 22 et 23. Chaque échancrure 28 peut recevoir l'extrémité libre d'une languette de blocage 29 montée pivotante, à son autre extrémité, sur un des bords d'un logement 16 du support mobile 15.

Ainsi, l'aube 5 à ajuster est préalablement enserrée dans le module de fixation 21, après avoir été correctement positionnée à l'intérieur de celui-ci. Le module de fixation 21 est ensuite logé dans un des logements 16 du support 15, les languettes de blocage 29 correspondantes étant rabattues. Pour fixer le module 21 au support 15, les languettes 29 sont amenées dans les échancrures 28 correspondantes du module 21.

Par ailleurs, dans l'exemple de la figure 1, le palpeur 8 comporte une tête de palpage 8A montée sur un bloc mobile 8B.

Le bloc mobile 8B du palpeur 8 est apte à se déplacer suivant trois axes X, Y, Z, deux à deux orthogonaux. Les directions des axes X et Y définissent un plan de déplacement horizontal du bloc mobile 8 et la direction de l'axe Z caractérise un déplacement vertical de celui-ci.

Avantageusement, l'axe longitudinal L de rotation du support 15 est agencé orthogonalement à l'axe Z. Bien évidemment, d'autres dispositions des axes X, Y, Z et L sont également envisageables.

Le palpeur 8 permet d'étalonner le programme d'ajustage en repositionnant les moyens 9 sur le point d'origine O prédéfini pour chaque pied 4 d'aube à ajuster, ce qui permet de tenir compte des écarts dimensionnels entre les différents pieds d'aube successivement ajustés.

En outre, dans cet exemple, les moyens 9 pour chanfreiner se présentent sous la forme d'une fraise à chanfreiner 9A (par exemple une fraise à carbure), dont l'angle de pointe θ est égal à 90°. La fraise à chanfreiner 9A est montée sur un bloc mobile 9B, semblable à celui du palpeur 8, de sorte qu'elle peut également être déplacée selon les trois axes X, Y et Z.

Préalablement à l'opération de chanfreinage, la fraise 9A, commandée automatiquement par les moyens de commande 12, est avantageusement positionnée au point d'origine 0 prédéfini, orthogonalement au profil 3 du pied 4 à ajuster. Ainsi, comme le montre la figure 4, on obtient, après chanfreinage, des arêtes auxiliaires 10 dont les angles intérieurs β associés sont identiques et égaux à 135°.

De plus, la profondeur p du chanfrein 18 réalisé, correspondant à la distance séparant le sommet de l'arête principale 6 de la surface biseautée 19, suivant une direction orthogonale à cette dernière, est déterminée lors de la configuration préalable du programme d'ajustage.

Comme illustré sur les figures 4 et 5, quelle que soit la profondeur p du chanfrein 18 réalisé, le chanfreinage conforme à l'invention entraîne l'apparition d'une ligne de chanfrein rectiligne 20 sur la courbure du contour 2 définie dans un plan orthogonal à ce dernier, cette ligne de chanfrein 20 étant d'autant plus longue que la profondeur p du chanfrein 18 est importante. Le brossage des arêtes auxiliaires 10 permet par la suite de réduire la longueur de la ligne de chanfrein 20.

Par ailleurs, les moyens de brossage 11 comportent une brosse circulaire rotative 11A à poils ondulés qui est mise en rotation par l'intermédiaire d'un arbre d'entraînement longitudinal 11B orthogonal à la direction générale des poils ondulés.

En outre, dans l'exemple de la figure 1, l'arbre d'entraînement 11B est sensiblement parallèle à l'axe Z. L'ensemble formé par la brosse 11A et par l'arbre d'entrainement 11B est monté sur un bloc mobile 11C semblable à celui du palpeur 8, de sorte que la brosse peut être déplacée suivant les axes X, Y et Z.

Dans l'exemple décrit, la combinaison des moyens de brossage 11, mobiles 11 suivant les axes X, Y et Z, et des moyens 7, montés rotatifs autour de l'axe longitudinal L, permet d'ajuster précisément la position relative de la brosse 11A par rapport aux arêtes auxiliaires 10, de manière à maintenir le plan de rotation des poils ondulés de la brosse 11A sensiblement parallèle à la portion en cours de brossage de chacune des arêtes auxiliaires 10. En effet, on peut adapter, par rotation du support mobile 15, l'inclinaison du contour 2 du profil 3 à brosser par rapport au plan de rotation de la brosse 11A.

Ainsi, la machine outil 1 de l'invention ne comporte, avantageusement, que quatre axes de déplacement (X, Y, Z, L), de sorte que sa conception et sa fabrication en sont grandement facilitées.

Par ailleurs, comme le montre la figure 3, dés que les opérations de chanfreinage et de brossage ont été effectuées, la ligne de chanfrein 20 est réduite et la courbure du contour 2 du profil 3, dans un plan orthogonal audit contour 2, présente une forme sensiblement arrondie.

Grâce à l'invention, le chanfrein 18, obtenu sur le contour 2 du profil 3 du pied d'aube 4, est régulier et les arêtes auxiliaires 10 sont émoussées de façon sensiblement identique sur l'ensemble du contour 2.

En outre, la machine outil 1 peut répéter à l'identique les opérations de chanfreinage et de brossage précitées sur une multitude de pieds d'aube, de sorte que l'on obtient des pieds d'aube présentant des contours ajustés sensiblement similaires entre eux. Ainsi, on facilite le montage de la turbine à haute pression, tout en améliorant sa fiabilité (le risque de rupture des pièces étant réduit).

De surcroît, l'invention ne nécessite qu'une seule prise d'un pied d'aube à ajuster (contrairement aux opérations d'ajustage réalisées manuellement), ce qui permet de réduire le temps requis pour l'ajustage.

Par ailleurs, on pourra remarquer que la machine outil 1 de la présente invention peut également être mise en oeuvre pour brosser une ou plusieurs portions d'un pied d'aube, conformément à l'opération de brossage décrite précédemment, sans mise en oeuvre de l'opération de chanfreinage.

## Revendications

1. Procédé pour l'ajustage d'un contour (2) prédéterminé d'un pied d'aube (4) de turbine comprenant une arête saillante principale (6) définie par un angle intérieur (α) déterminé,
**caractérisé par le fait que** l'on effectue les étapes successives suivantes :
A/ on palpe le contour (2) prédéterminé du pied d'aube (4), pour déterminer un point d'origine (O) prédéfini sur ce contour (2) ;
B/on chanfreine l'arête principale du contour (2) en suivant une trajectoire dont l'origine est déterminée par le point d'origine (O), de manière à obtenir deux arêtes saillantes auxiliaires (10) dont les angles intérieurs (β) associés sont respectivement supérieurs à l'angle intérieur (α) de l'arête principale (6) ; et
C/on émousse les arêtes auxiliaires (10) obtenues, pour parfaire l'ajustage du contour (2) du pied d'aube (4).

2. Procédé selon la revendication 1, dans lequel les étapes B/ et C/ sont mises en oeuvre automatiquement.

3. Procédé selon l'une quelconque des revendications 1 ou 2, dans lequel on fixe préalablement le pied d'aube (4) à ajuster à des moyens (7, 15, 16, 21) montés rotatifs autour d'un axe (L).

4. Procédé selon l'une quelconque des revendications 1 à 3, dans lequel les angles intérieurs (β) associés respectivement aux arêtes auxiliaires (10), obtenues après la mise en oeuvre de l'étape A/, sont identiques.

5. Procédé selon l'une quelconque des revendications 1 à 4, dans lequel l'étape C/ est réalisée par brossage des arêtes auxiliaires (10) au moyen d'une brosse circulaire rotative (11 A) à poils ondulés, entraînée en rotation par un arbre longitudinal (11B) sensiblement orthogonal, d'une part, à la direction générale des poils ondulés et, d'autre part, à la portion en cours de brossage de chacune des arêtes auxiliaires (10).

6. Machine outil (1) pour l'ajustage d'un contour (2) prédéterminé d'un pied (4) d'une aube (5) de turbine comprenant une arête saillante principale (6) définie par un angle intérieur (θ) déterminé,
**caractérisée par le fait qu'**elle comporte :
- des moyens (7) pour fixer l'aube (5) sur la machine outil (1), comportant au moins un module de fixation (21) de l'aube (5) apte à enserrer l'ailette (5A) de l'aube (5) et à laisser un contour (2) d'un profil (3) du pied (4) dégagé;
- des moyens (8) pour palper le contour prédéterminé (2) du profil (3) du pied (4) de l'aube fixée (5), de manière à détecter un point d'origine (O) prédéfini sur ce contour (2);
- des moyens (9) pour chanfreiner l'arête principale (6) du contour (2), de manière à obtenir deux arêtes saillantes auxiliaires (10) dont les angles intérieurs (β) associés sont respectivement supérieurs à l'angle intérieur (α) de l'arête principale (6) ;
- des moyens (11) pour émousser les arêtes auxiliaires (10) obtenues, afin de parfaire l'ajustage du contour (2) du pied d'aube (4) ; et
- des moyens (12) pour commander automatiquement les moyens (8) pour palper, ainsi que les moyens (9) pour chanfreiner et les moyens (11) pour émousser, de sorte que les moyens (9) pour chanfreiner suivent des trajectoires dont l'origine est déterminée par le point d'origine (O) détecté par le palpeur.

7. Machine outil selon la revendication 6, **caractérisé en ce que** les moyens (7) comporte un support (15) monté rotatif autour d'un axe (L), et recevant au moins un module de fixation (21) de l'aube (5) dont le pied d'aube (4) est à ajuster.

8. Machine outil selon l'une des revendications 6 ou 7, dans laquelle l'au moins un module de fixation (21) comporte des organes de contact (27A) destinés à s'appliquer avec une surface réduite sur l'ailette (5A) de l'aube (5) dont le pied (4) est à ajuster.

9. Machine outil selon l'une des revendications 6 à 8, dans laquelle l'au moins un module de fixation (21) comporte au moins un organe de contact (27B) destiné à s'appliquer sur le pied d'aube (4) à ajuster.

## Patentansprüche

1. Verfahren zur Anpassung einer vorgegebenen Kontur (2) eines Schaufelfußes (4) einer Turbine, die eine vorspringende Hauptkante (6) umfasst, die durch einen bestimmten inneren Winkel (α) definiert wird,
**dadurch gekennzeichnet, dass** die folgenden Schritte durchgeführt werden:
A Abtasten der vorgegebenen Kontur (2) des Schaufelfußes (4), um einen vordefinierten Ursprungspunkt (O) auf dieser Kontur (2) zu bestimmen;
B Abschrägen der Hauptkante der Kontur (2), indem einer Bahn gefolgt wird,
deren Ursprung durch den Ursprungspunkt (O) bestimmt wird, so dass zwei vorspringende Hilfskanten (10) erhalten werden, deren zugehörige innere Winkel (β) jeweils größer sind als der innere Winkel (α) der Hauptkante (6); und
C Abstumpfen der erhaltenen Hilfskanten (10), um die Anpassung der Kontur (2) des Schaufelfußes (4) zu vervollkommnen.

2. Verfahren nach Anspruch 1, bei dem die Schritte B und C automatisch durchgeführt werden.

3. Verfahren nach einem der Ansprüche 1 oder 2, bei dem zuvor der anzupassende Schaufelfuß (4) an Mitteln (7, 15, 16, 21) fixiert wird, die um eine Achse (L) drehbar gelagert sind.

4. Verfahren nach einem der Ansprüche 1 bis 3, bei dem die inneren Winkel (β), die jeweils den Hilfskanten (10) zugehörig sind, die nach der Durchführung von Schritt A erhalten werden, identisch sind.

5. Verfahren nach einem der Ansprüche 1 bis 4, bei dem Schritt C durch Bürsten der Hilfskanten (10) mittels einer drehbaren Scheibenbürste (11A) mit gewellten Borsten realisiert wird, die von einer Längswelle (11 B) zur Drehung angetrieben ist, die im Wesentlichen einerseits zu der allgemeinen Richtung der gewellten Borsten und andererseits zu dem gerade gebürsteten Teil jeder der Hilfskanten (10) orthogonal ist.

6. Werkzeugmaschine (1) zur Anpassung einer vorgegebenen Kontur (2) eines Fußes (4) einer Schaufel (5) einer Turbine, die eine vorspringende Hauptkante (6) umfasst, die durch einen bestimmten inneren Winkel (α) definiert wird,
**dadurch gekennzeichnet, dass** sie Folgendes aufweist:
- Mittel (7) zum Fixieren der Schaufel (5) an der Werkzeugmaschine (1), die ein Modul zum Fixieren (21) der Schaufel (5) aufweisen, das dafür eingerichtet ist, das Blatt (5A) der Schaufel (5) einzuspannen und eine Kontur (2) eines Profils (3) des Fußes (4) frei zu lassen;
- Mittel (8) zum Abtasten der vorgegebenen Kontur (2) des Profils (3) der fixierten Schaufel (5), so dass ein auf dieser Kontur (2) vordefinierter Ursprungspunkt (O) detektiert wird;
- Mittel (9) zum Abschrägen der Hauptkante (6) der Kontur (2), so dass zwei vorspringende Hilfskanten (10) erhalten werden, deren zugehörige innere Winkel (β) jeweils größer sind als der innere Winkel (α) der Hauptkante (6);
- Mittel (11) zum Abstumpfen der erhaltenen Hilfskanten (10), um die Anpassung der Kontur (2) des Schaufelfußes (4) zu vervollkommnen; und
- Mittel (12) zum automatischen Steuern der Mittel (8) zum Abtasten sowie der Mittel (9) zum Abschrägen und der Mittel (11) zum Abstumpfen, so dass die Mittel (9) zum Abschrägen Bahnen folgen, deren Ursprung durch den vom Taster abgetasteten Ursprungspunkt (O) bestimmt wird.

7. Werkzeugmaschine (1) nach Anspruch 6, **dadurch gekennzeichnet, dass** die Mittel (7) einen Träger (15) aufweisen, der um eine Achse (L) drehbar gelagert ist und wenigstens ein Modul zum Fixieren (21) der Schaufel (5) aufnimmt, deren Schaufelfuß (4) anzupassen ist.

8. Werkzeugmaschine nach einem der Ansprüche 6 oder 7, wobei das wenigstens eine Modul zum Fixieren (21) Kontaktorgane (27A) aufweist, die dazu bestimmt sind, mit einer verringerten Fläche auf dem Blatt (5A) der Schaufel (5), deren Fuß (4) anzupassen ist, aufgesetzt zu werden.

9. Werkzeugmaschine nach einem der Ansprüche 6 bis 8, wobei das wenigstens eine Modul zum Fixieren (21) wenigstens ein Kontaktorgan (27B) aufweist, das dazu bestimmt sind, auf dem anzupassenden Schaufelfuß (4) aufgesetzt zu werden.

## Claims

1. A method for adjusting a predetermined contour (2) of a turbine blade root (4) comprising a main salient edge (6) defined by a determined interior angle (α),
**characterized in that** the following successive steps are performed:
A/ the main edge of the contour (2) is chamfered in order to obtain two auxiliary salient edges (10), the associated interior angles (β) of which are respectively greater than the interior angle (α) of the main edge (6); and
B/ the auxiliary edges (10) obtained are blunted in order to fine-tune the contour (2) of the blade root (4).

2. The method as claimed in claim 1, in which steps A/ and B/ are implemented automatically.

3. The method as claimed in claim 1, in which the blade root (4) to be adjusted is clamped beforehand to means (7, 15, 16, 21) mounted so as to rotate about an axis (L).

4. The method as claimed in claim 3, in which, before step A/ is implemented, the predetermined contour (2) of the blade root (4) is probed in order to determine a predefined origin (O) on this contour (2) from which the chamfering of step A/ is begun.

5. The method as claimed in claim 1, in which the interior angles (β) respectively associated with the auxiliary edges (10), obtained after implementation of step A/, are identical.

6. The method as claimed in claim 1, in which step B/ is carried out by brushing the auxiliary edges (10) using a rotating circular brush (1 1 A) having crimped bristles, which is driven in rotation by a longitudinal shaft (1 1 B) substantially perpendicular, on the one hand, to the general direction of the crimped bristles and, on the other hand, to that portion of each of the auxiliary edges (10) currently being brushed.

7. A machine tool for adjusting a predetermined contour (2) of a turbine blade root (4) comprising a main salient edge (6) defined by a determined interior angle (α),
**characterized in that** it comprises:
- means (9) for chamfering the main edge (6) of the contour (2), in order to obtain two auxiliary salient edges (10), the associated interior angles (β) of which are respectively greater than the interior angle (α) of the main edge (6);
- means (1 1) for blunting the auxiliary edges (10) obtained, in order to fine-tune the contour (2) of the blade root (4); and
- means (12) for automatically controlling the chamfering means (9) and the blunting means (1 1).

8. The machine tool as claimed in claim 7, comprising means (7, 15, 16, 21), mounted so as to rotate about an axis (L), to which means is clamped the blade root (4) to be adjusted and which means comprise at least one detachable clamping module (21) suitable for gripping the blade root (4) to be adjusted.

9. The machine tool as claimed in claim 8, in which the clamping module (21) comprises contact members (27A, 27B) designed to press against the blade root (4) to be adjusted.
